# EUROPEAN PATENT APPLICATION

(11) **EP 2 849 147 A1**
(43) Date of publication of application: **18.03.2015**
(21) Application number: 13787611.6
(22) Date of filing: 31.01.2013
(51) Int. Cl.: G06Q 50/26

(54) **POLICY SELECTION SYSTEM**

(30) Priority: 07.05.2012 JP 2012105594
(71) Applicant: Suzuki, Eisuke, Yokkaichi-shi, Mie 512-8041 (JP)
(72) Inventor: Suzuki, Eisuke, Yokkaichi-shi, Mie 512-8041 (JP)
(74) Representative: Kramer Barske Schmidtchen Patentanwälte PartG mbB
(86) International application number: PCT/JP2013/052157
(87) International publication number: WO 2013/168439

(57) **Abstract**

A policy selection system that enables selection of a policy that reflects a change in public opinion after an election in a timely manner is provided. There are included means for selecting at least one of a plurality of pieces of policy data accumulated in advance in a web server 2, and for allowing a voter and an election winner in a predetermined electoral district to cast online votes from predetermined online voting terminals 4 and 5 within a predetermined period, means for counting the number of online votes from voters for each piece of policy data, means for counting the number of online votes from election winners for the each piece of policy data, and means 6 for selecting and outputting, when the number of voters who have participated in online voting accounts for a predetermined percentage or more of a total number of voters in the predetermined electoral district, policy data with a highest number of online votes from voters or with a highest total number of online votes from voters and election winners as a council agenda item, and for selecting and outputting, when voters who have participated in online voting account for the predetermined percentage or less of the voters in the predetermined electoral district, policy data with a highest number of online votes from the election winners as a council agenda item.

## Description

### Technical Field

The present invention relates to a policy selection system, and more particularly, to a system for selecting from a large number of pieces of policy data accumulated on a web.

### Background Art

Patent Literature 1 proposes a democratic government system for improving the quality of policy decision by paying a greater amount of consideration for support to policy proposal/decision of a decision-making supporter agent which better reflects the intention of a voter agent.

### Citation List

### Patent Literature

Patent Literature 1: Japanese Patent Laid-Open No. 2004-166325

### Summary of Invention

### Technical Problem

However, with the conventional proposal mentioned above, there is an issue that a change in the public opinion after an election is not reflected in a policy in a timely manner. For example, public opinion regarding restarting of a nuclear power plant after the Great East Japan Earthquake is not reflected in the policies discussed in the Diet in a timely manner.

Accordingly, the present invention aims to provide a policy selection system that enables selection of a policy that reflects a change in public opinion after an election in a timely manner.

### Solution to Problem

To achieve the object described above, a policy selection system of a first aspect of the present invention includes first means for selecting at least one of a plurality of pieces of policy data accumulated in advance in a web server, and for allowing a voter and an election winner in a predetermined electoral district to cast online votes from a predetermined online voting terminal within a predetermined period, second means for counting the number of online votes from voters for each piece of policy data, third means for counting the number of online votes from election winners for the each piece of policy data, and fourth means for selecting and outputting, when the number of voters who have participated in online voting accounts for a predetermined percentage or more of a total number of voters in the predetermined electoral district, policy data with a highest number of online votes from voters or with a highest total number of online votes from voters and election winners as a council agenda item, and for selecting and outputting, when voters who have participated in online voting account for the predetermined percentage or less of the voters in the predetermined electoral district, policy data with a highest number of online votes from election winners as a council agenda item.

According to the policy selection system of the first aspect of the present invention, casting of online votes by voters and election winners using a predetermined online voting terminal within a predetermined period is allowed, and policy data with the highest number of online votes is selected and output as a council agenda item, and thus, a policy reflecting a change in public opinion after an election in a timely manner may be selected and discussed by the council.

According to a policy selection system of a second aspect of the present invention, the policy data selected and output as the council agenda item when the number of voters who have participated in online voting accounts for the predetermined percentage or more of the total number of voters in the predetermined electoral district is a plurality of pieces of policy data that are attached with the number of online votes from voters or a total number of online votes from voters and election winners, or that are ranked in a descending order of the number of online votes from voters or of a total number of online votes from voters and election winners.

According to the policy selection system of the second aspect of the present invention, a council may appropriately select, according to the situation, an optimum policy from a plurality of pieces of policy data that reflect a change in public opinion in a timely manner and discuss the optimum policy.

According to a policy selection system of a third aspect of the present invention, the policy data selected and output as the council agenda item when the number of voters who have participated in online voting accounts for the predetermined percentage or less of the total number of voters in the predetermined electoral district is a plurality of pieces of policy data that are attached with the number of online votes from election winners, or that are ranked in a descending order of the number of online votes from election winners.

According to the policy selection system of the third aspect of the present invention, a council may appropriately select, according to the situation, an optimum policy from a plurality of pieces of policy data that reflect a change in public opinion in a timely manner and discuss the optimum policy.

According to a policy selection system of a fourth aspect of the present invention, selection/output of the plurality of pieces of policy data is performed for each of policy fields to which the pieces of policy data belong. According to the policy selection system of the fourth aspect of the present invention, since policy data is selected and output for each policy field, a council may more easily select, and voters may check, a policy to be an agenda item.

A policy selection system of a fifth aspect of the present invention further includes fifth means for accumulating a plurality of pieces of policy data in the web server while ranking the plurality of pieces of policy data according to the number of votes from the voters in the predetermined electoral district. According to the policy selection system of the fifth aspect of the present invention, voters and the like may more easily cast online votes for policy data.

A policy selection system of a sixth aspect of the present invention further includes sixth means for accumulating a plurality of pieces of policy data in the web server for each policy data set of each election candidate in the predetermined electoral district. According to the policy selection system of the sixth aspect of the present invention, voters and the like may more easily cast online votes for policy data.

A policy selection system of a seventh aspect of the present invention further includes seventh means for accumulating a plurality of pieces of policy data in the web server for each of policy fields to which the pieces of policy data belong. According to the policy selection system of the seventh aspect of the present invention, voters and the like may more easily cast online votes for policy data.

A policy selection system of an eighth aspect of the present invention further includes eighth means for selecting at least one of a plurality of pieces of policy data accumulated in advance in a web server, and for allowing a voter, an election winner and a defeated candidate in a predetermined electoral district to cast online votes from a predetermined online voting terminal within a predetermined period, ninth means for counting the number of online votes from voters for each piece of policy data, tenth means for counting the number of online votes from election winners for the each piece of policy data, eleventh means for selecting and outputting, when the number of voters who have participated in online voting accounts for a predetermined percentage or more of a total number of voters in the predetermined electoral district, policy data with a highest number of online votes from voters or with a highest total number of online votes from voters and election winners as a council agenda item, and for selecting and outputting, when voters who have participated in online voting account for the predetermined percentage or less of the voters in the predetermined electoral district, policy data with a highest number of online votes from election winners as a council agenda item, twelfth means for storing, for each voter, each election winner and each defeated candidate, policy data for which the voter, the election winner and the defeated candidate have casted online votes, and thirteenth means for extracting and outputting at least one of an election winner and a defeated candidate who have casted online votes for policy data that is the same as or similar to policy data for which each voter has casted an online vote.

According to the policy selection system of the eighth aspect of the present invention, casting of online votes by voters and election winners using a predetermined online voting terminal within a predetermined period is allowed, and policy data with the highest number of online votes is selected and output as a council agenda item, and thus, a policy reflecting a change in public opinion after an election in a timely manner may be selected and discussed by the council. Moreover, voters are enabled to discover a potential implementer of a policy, and also, voters are enabled to easily check whether an election winner or the like actually has a political idea in line with a campaign pledge or whether the election winner or the like is basically not acting against the political campaign pledge.

A policy selection system of a ninth aspect of the present invention further includes fourteenth means for selecting at least one of the plurality of pieces of policy data accumulated in advance in the web server, and for allowing an expected candidate for a next election in the predetermined electoral district to cast an online vote from a predetermined online voting terminal within the predetermined period, fifteenth means for storing, for each expected candidate for the next election, policy data for which the expected candidate for the next election has casted an online vote, and sixteenth means for extracting and outputting at least one of an election winner, a defeated candidate and a candidate for the next election who have casted online votes for policy data that is the same as or similar to policy data for which each voter has casted an online vote.

According to the policy selection system of the ninth aspect of the present invention, voters are enabled to discover a potential implementer of a policy, and also, voters are enabled to easily check whether an election winner or the like actually has a political idea in line with a campaign pledge or whether the election winner or the like is basically not acting against the political campaign pledge.

Additionally, each means of the inventions described above is realized by executing programs on a web server, for example.

### Advantageous Effects of Invention

As described above, according to the policy selection system of the present invention, a policy that reflects a change in public opinion after an election in a timely manner may be selected.

### Brief Description of Drawings

[Figure 1] Figure 1 is a schematic configuration diagram showing an example of a policy selection system of the present invention.
[Figure 2] Figure 2 is a diagram showing an example of a ballot paper for casting a vote.
[Figure 3] Figure 3 is a flow chart showing an example of a process performed by a web server.

### Description of Embodiments

Additionally, the embodiments described below are only examples, and various design improvements by those skilled in the art fall within the scope of the present invention as long as they do not depart from the spirit of the present invention.

### (First Embodiment)

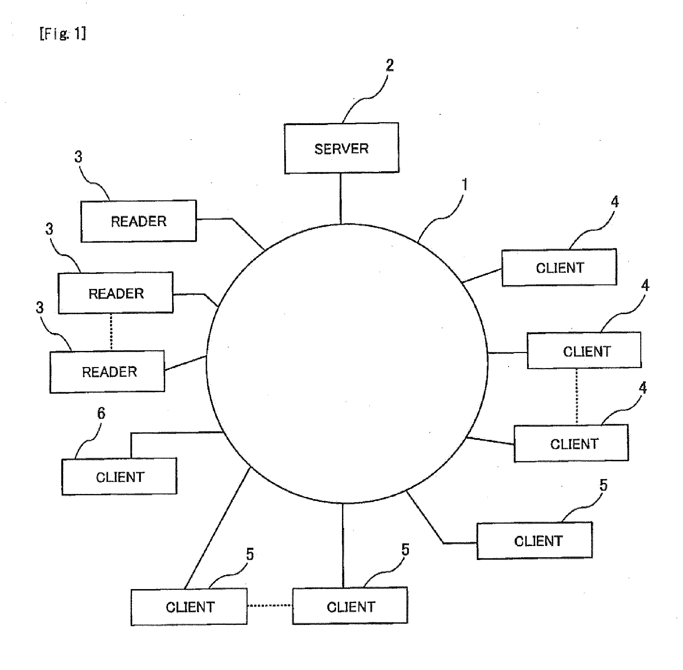

An example of a policy selection system of the present invention is shown in Figure 1. In Figure 1, the policy selection system is configured from a web server 2, a reader 3 installed at each polling station, a client computer (including a mobile terminal) 4 installed for each voter, a client computer (including a mobile terminal) 5 installed for each election candidate (an election winner or a defeated candidate), and a client computer 6 for outputting policy data to be discussed in the council, these being mutually connected by an Internet 1.

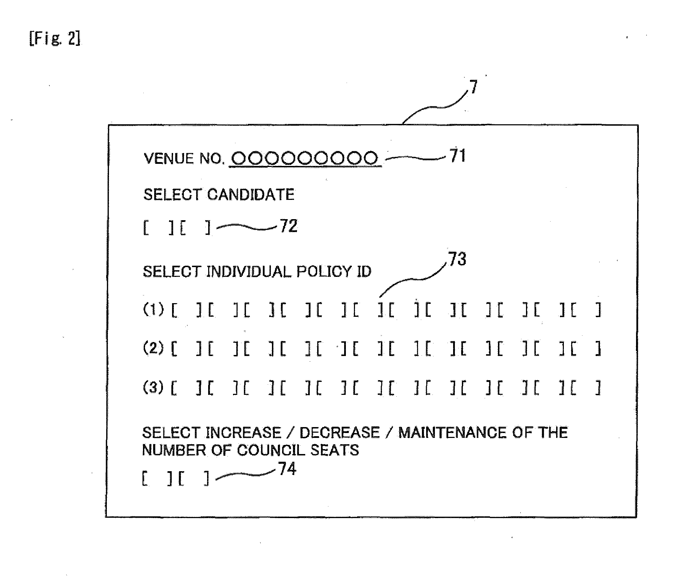

An example of a ballot paper 7 for policy accumulation in the web server 2 is shown in Figure 2. In Figure 2, the ballot paper 7 includes a column 71 for entering a "venue no." assigned to each voting venue in advance, a column 72 for casting a vote by entering a candidate number assigned to each candidate in advance, a column 73 for entering an individual ID symbol assigned in advance to each policy such as "abolition of inheritance tax" or "raise in consumption tax rate" so as to allow identification thereof, and a column 74 for entering the increase/decrease or maintenance of the number of council seats using a symbol "+" or "-" and a number ("0" in the case of maintenance of council seats).

The ballot paper 7 filled out by a voter at a certain voting venue is run through the reader 3 installed at the venue, and the policy data entered by an ID symbol is read by the reader 3 together with the data of candidate number and the data of increase/decrease or maintenance of the number of council seats. The policy data which has been read is transmitted over the Internet 1 to be accumulated in the web server 2. Policy data in this case is accumulated together with the frequency of the policy data being entered in the ballot paper 7 in an electoral district of a national or local government in a national election or a local election identified by the "venue no.", that is, the number of votes from the voters, or by being ranked according to the number of votes from the voters.

Also, every time data of a candidate number is transmitted to the web server 2, this is added up in the web server 2 as the number of votes for the election candidate, and election candidates are stored as election winners in the descending order from an election candidate with the highest number of votes until the full number of seats is reached. Other election candidates are stored as defeated candidates. The data of increase/decrease or maintenance of the number of council seats is also stored in the web server 2 to be made a council agenda item, or if allowed by law, to be directly reflected in the determination of increase/decrease of the number of election winners.

With respect to the policy data accumulated in the web server 2, at least the voters and the election winners in the electoral district may, respectively, view the policy data for the electoral district on the client computers 4 and 5 which are online voting terminals. Also, the voters and the election winners in the electoral district may cast votes (online votes) once a day for a predetermined number of pieces of policy data (one or more) using the client computers 4 and 5, for example.

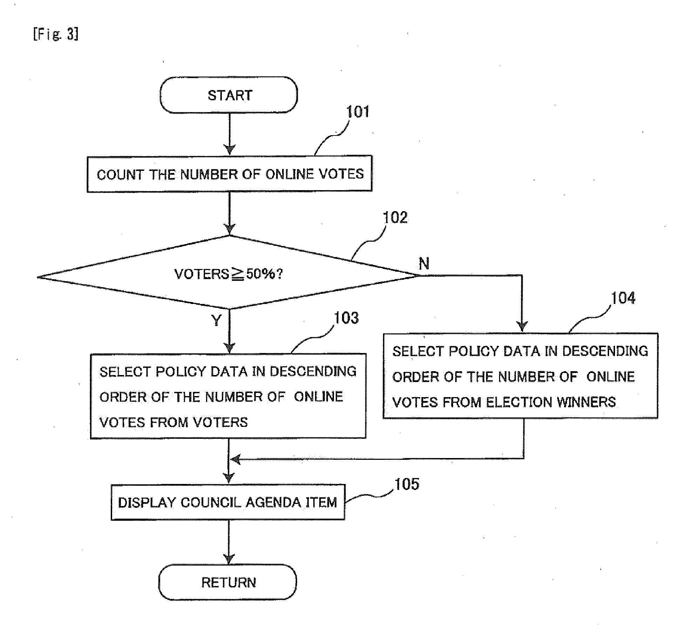

On the web server 2, each of the number of online votes from the voters and the number of online votes from the election winners for each piece of policy data is counted (step 101 in Figure 3). Then, whether the number of voters who have participated in the online voting accounts for a predetermined percentage or more of the total number of voters in the electoral district (for example, 50%; this is appropriately changed according to the turnout rate) is determined (step 102), and when it accounts for the predetermined percentage or more, a plurality of pieces of policy data are selected starting from the policy data with the highest number of online votes from the voters, the plurality of pieces of policy data being ranked in the descending order of the number of online votes (step 103), and these pieces of policy data are output to the client computer 6, and are displayed as council agenda items on the computer 6. Additionally, the policy data which is a council agenda item may be displayed on other than the computer 6, such as the client computer 4 of a voter or the like.

On the web server 2, when the number of voters who have participated in the online voting accounts for less than the predetermined percentage of the total number of voters in the electoral district, a plurality of pieces of policy data are selected starting from the policy data with the highest number of online votes from the election winners, the plurality of pieces of policy data being ranked in the descending order of the number of online votes (step 104), and these pieces of policy data are output to the client computer 6, and are displayed as council agenda items on the computer 6. Additionally, the policy data which is a council agenda item may be displayed on other than the computer 6, such as the client computer 4 of a voter or the like.

The council in the electoral district discusses in order the pieces of policy data displayed as agenda items in the above-described manner whenever the council schedule is open. Additionally, in ordinary times other than cases of emergency, the council makes an arrangement in advance to use the ranking of one week before, for example. This has a beneficial effect that the councilors may collect information regarding the policy, or may study in advance what measures may be taken. The policy data which has been discussed and for which vote was taken is removed from the accumulation in the web server 2 according to an instruction input from the client computer 6.

In the present embodiment, in step 103, a plurality of pieces of policy data may be selected starting from the policy data with the highest total number of online votes from the voters and the election winners, instead of from the voters, the plurality of pieces of policy data being ranked in the descending order of the total number of online votes. Additionally, in step 103 and step 104, the pieces of policy data do not have to be ranked in the descending order of the number of online votes or the total number of online votes, but each policy data may simply be attached with the number of online votes or the total number of online votes. Moreover, it is also possible to select only the policy data with the highest number of online votes or with the highest total number of online votes. Also, selection of policy data may be performed under the conditions described above for each field to which policy data belongs.

In the present embodiment, with respect to accumulation of policy data in the web server 2, accumulation may be performed for each policy data set of each election candidate instead of using the number of online votes or voting by the voters in the electoral district. Also, accumulation of policy data in the web server 2 may be performed for each policy field to which the policy data belongs.

### (Second Embodiment)

In a present embodiment, the web server 2 stores each piece of policy data which has been voted for online in association with each of a voter, an election winner, and a defeated candidate who have voted for the policy data. Then, the web server 2 extracts, and displays on the client computer 4, at least one of the election winner and the defeated candidate who have casted votes for policy data that is the same as or similar to the policy data for which the voter has casted an online vote from the client computer 4. Additionally, the same thing may be performed with respect to voting in an election instead of online voting.

In this case, an election winner or the like who has selected the same policy data on the same day may be extracted with respect to each field while displaying the degree of similarity of the policy data in percentage. Moreover, extraction may be performed while narrowing down to specific policies or fields. Also, extraction may be performed while displaying, in percentage, the degree of similarity of the policy data of an election winner or the like who has selected, a similar number of times regardless of date, the same or similar policy data in every field in each specific period (term, year, month) until the next election. Furthermore, extraction of an election winner or the like who has selected, a similar number of times regardless of date, the same or similar policy data may be performed while narrowing down to specific policies or fields. Additionally, the same thing may be performed with respect to voting in an election instead of online voting.

Voters are thereby enabled to obtain reference data for the next election, and also, to discover a potential implementer of a policy, or to check whether one actually has a political idea in line with a campaign pledge or whether one is basically not acting against the political campaign pledge.

### (Third Embodiment)

In a present embodiment, information about an expected candidate who will run in the next election is also stored in the web server 2 according to the first embodiment, and the web server 2 stores each piece of policy data which has been voted for online or in an election in association with each of a voter, an election winner, a defeated candidate, and an expected candidate for the next election who have voted for the policy data. Then, the web server 2 extracts, and displays on the client computer 4, at least one of the election winner, the defeated candidate and the expected candidate for the next election who have casted votes for policy data that is the same as or similar to the policy data for which the voter has casted an online vote from the client computer 4.

In this case, an election winner or the like who has selected the same policy data on the same day may be extracted with respect to each field while displaying the degree of similarity of the policy data in percentage. Moreover, extraction may be performed while narrowing down to specific policies or fields. Also, extraction may be performed while displaying, in percentage, the degree of similarity of the policy data of an election winner who has selected, a similar number of times regardless of date, the same or similar policy data in every field in each specific period (term, year, month) until the next election. Furthermore, extraction of an election winner or the like who has selected policy data a similar number of times regardless of date may be performed while narrowing down to specific policies or fields.

Voters are thereby enabled to obtain reference data for the next election, and also, to discover a potential implementer of a policy, or to check whether one actually has a political idea in line with a campaign pledge or whether one is basically not acting against the political campaign pledge.

In each of the embodiments described above, accumulation of policy data in the web server 2 may be performed on a regular basis in the order of arrival from the client computer 4. In the embodiments above, a case has been described where voting is performed using paper such as a ballot paper, but it is needless to say voting may also be performed electronically. Also, the method of accumulating policy data in a web server is not limited to voting in election, and a paper medium on which policy data and a corresponding code (a QR code or the like) are printed may be scanned to perform input in the web server.

### Reference Signs List

- 1: Internet
- 2: Web server
- 3: Reader
- 4, 5, 6: Client computer

## Claims

1. A policy selection system comprising:
first means for selecting at least one of a plurality of pieces of policy data accumulated in advance in a web server, and for allowing a voter and an election winner in a predetermined electoral district to cast online votes from a predetermined online voting terminal within a predetermined period;
second means for counting the number of online votes from voters for each piece of policy data;
third means for counting the number of online votes from election winners for the each piece of policy data; and
fourth means for selecting and outputting, when the number of voters who have participated in online voting accounts for a predetermined percentage or more of a total number of voters in the predetermined electoral district, policy data with a highest number of online votes from voters or with a highest total number of online votes from voters and election winners as a council agenda item, and for selecting and outputting, when voters who have participated in online voting account for the predetermined percentage or less of the voters in the predetermined electoral district, policy data with a highest number of online votes from election winners as a council agenda item.

2. The policy selection system according to claim 1, wherein the policy data selected and output as the council agenda item when the number of voters who have participated in online voting accounts for the predetermined percentage or more of the total number of voters in the predetermined electoral district is a plurality of pieces of policy data that are attached with the number of online votes from voters or a total number of online votes from voters and election winners, or that are ranked in a descending order of the number of online votes from voters or of a total number of online votes from voters and election winners.

3. The policy selection system according to claim 1, wherein the policy data selected and output as the council agenda item when the number of voters who have participated in online voting accounts for the predetermined percentage or less of the total number of voters in the predetermined electoral district is a plurality of pieces of policy data that are attached with the number of online votes from election winners, or that are ranked in a descending order of the number of online votes from election winners.

4. The policy selection system according to claim 2 or 3, wherein selection/output of the plurality of pieces of policy data is performed for each of policy fields to which the pieces of policy data belong.

5. The policy selection system according to claim 1, further comprising:
fifth means for accumulating a plurality of pieces of policy data in the web server while ranking the plurality of pieces of policy data according to the number of votes from the voters in the predetermined electoral district.

6. The policy selection system according to claim 1, further comprising:
sixth means for accumulating a plurality of pieces of policy data in the web server for each policy data set of each election candidate in the predetermined electoral district.

7. The policy selection system according to claim 1, further comprising:
seventh means for accumulating a plurality of pieces of policy data in the web server for each of policy fields to which the pieces of policy data belong.

8. A policy selection system comprising:
eighth means for selecting at least one of a plurality of pieces of policy data accumulated in advance in a web server, and for allowing a voter, an election winner and a defeated candidate in a predetermined electoral district to cast online votes from a predetermined online voting terminal within a predetermined period;
ninth means for counting the number of online votes from voters for each piece of policy data;
tenth means for counting the number of online votes from election winners for the each piece of policy data;
eleventh means for selecting and outputting, when the number of voters who have participated in online voting accounts for a predetermined percentage or more of a total number of voters in the predetermined electoral district, policy data with a highest number of online votes from voters or with a highest total number of online votes from voters and election winners as a council agenda item, and for selecting and outputting, when voters who have participated in online voting account for the predetermined percentage or less of the voters in the predetermined electoral district, policy data with a highest number of online votes from election winners as a council agenda item;
twelfth means for storing, for each voter, each election winner and each defeated candidate, policy data for which the voter, the election winner and the defeated candidate have casted online votes; and
thirteenth means for extracting and outputting at least one of an election winner and a defeated candidate who have casted online votes for policy data that is the same as or similar to policy data for which each voter has casted an online vote.

9. The policy selection system according to claim 1, further comprising:
fourteenth means for selecting at least one of the plurality of pieces of policy data accumulated in advance in the web server, and for allowing an expected candidate for a next election in the predetermined electoral district to cast an online vote from a predetermined online voting terminal within the predetermined period;
fifteenth means for storing, for each expected candidate for the next election, policy data for which the expected candidate for the next election has casted an online vote; and
sixteenth means for extracting and outputting at least one of an election winner, a defeated candidate and a candidate for the next election who have casted online votes for policy data that is the same as or similar to policy data for which each voter has casted an online vote.

10. An input terminal device for a policy selection system to be used by voters and election winners in a predetermined electoral district, wherein the input terminal device allows selection of at least one of a plurality of pieces of policy data accumulated in advance in a web server and casting of an online vote within a predetermined period.

11. An output terminal device for a policy selection system,
wherein the number of online votes from voters for a plurality of pieces of policy data accumulated in advance in a web server and the number of online votes from election winners for the pieces of policy data are separately counted,
wherein when the number of voters who have participated in online voting accounts for a predetermined percentage or more of a total number of voters in a predetermined electoral district, policy data with a highest number of online votes from voters or with a highest total number of online votes from voters and election winners is selected and output as a council agenda item, and
wherein when voters who have participated in online voting account for the predetermined percentage or less of the voters in the predetermined electoral district, policy data with a highest number of online votes from the election winners is selected and output as a council agenda item.

12. An input terminal device for a policy selection system to be used by voters, election winners and defeated candidates in a predetermined electoral district, wherein the input terminal device allows selection of at least one of a plurality of pieces of policy data accumulated in advance in a web server and casting of an online vote within a predetermined period.

13. An output terminal device for a policy selection system,
wherein the number of online votes from voters for a plurality of pieces of policy data accumulated in advance in a web server and the number of online votes from election winners for the pieces of policy data are separately counted,
wherein when the number of voters who have participated in online voting accounts for a predetermined percentage or more of a total number of voters in a predetermined electoral district, policy data with a highest number of online votes from voters or with a highest total number of online votes from voters and election winners is selected and output as a council agenda item,
wherein when voters who have participated in online voting account for the predetermined percentage or less of the voters in the predetermined electoral district, policy data with a highest number of online votes from election winners is selected and output as a council agenda item,
wherein policy data for which voters, election winners and defeated candidates have casted online votes are stored for each voter, each election winner and each defeated candidate, and
wherein at least one of an election winner and a defeated candidate who have casted online votes for policy data that is the same as or similar to policy data for which each voter has casted an online vote is extracted and output.

14. An output terminal device for a policy selection system,
wherein policy data for which voters, election winners and defeated candidates in a predetermined electoral district have casted online votes are stored for each voter, each election winner and each defeated candidate, and
wherein at least one of an election winner and a defeated candidate who have casted online votes for policy data that is the same as or similar to policy data for which each voter has casted an online vote is extracted and output.

15. An input terminal device for a policy selection system to be used by voters, election winners, defeated candidates and expected candidates for a next election in a predetermined electoral district, wherein the input terminal device allows selection of at least one of a plurality of pieces of policy data accumulated in advance in a web server and casting of an online vote within a predetermined period.

16. An output terminal device for a policy selection system,
wherein the number of online votes from voters for a plurality of pieces of policy data accumulated in advance in a web server and the number of online votes from election winners for the pieces of policy data are separately counted,
wherein when the number of voters who have participated in online voting accounts for a predetermined percentage or more of a total number of voters in a predetermined electoral district, policy data with a highest number of online votes from voters or with a highest total number of online votes from voters and election winners is selected and output as a council agenda item,
wherein when voters who have participated in online voting account for the predetermined percentage or less of the voters in the predetermined electoral district, policy data with a highest number of online votes from election winners is selected and output as a council agenda item,
wherein policy data for which voters, election winners, defeated candidates and expected candidates for a next election have casted online votes are stored for each voter, each election winner, each defeated candidate and each expected candidate for the next election, and
wherein at least one of an election winner, a defeated candidate, and an expected candidate for the next election who have casted online votes for policy data that is the same as or similar to policy data for which each voter has casted an online vote is extracted and output.

17. An output terminal device for a policy selection system,
wherein policy data for which voters, election winners, defeated candidates and expected candidates for a next election in a predetermined electoral district have casted online votes are stored for each voter, each election winner, each defeated candidate and each expected candidate for the next election, and
wherein at least one of an election winner, a defeated candidate and an expected candidate for the next election who have casted online votes for policy data that is the same as or similar to policy data for which each voter has casted an online vote is extracted and output.
